# EUROPEAN PATENT SPECIFICATION

(11) **EP 1 845 884 B1**
(45) Date of publication and mention of the grant of the patent: **12.08.2009**
(21) Application number: 06704660.7
(22) Date of filing: 06.02.2006
(51) Int. Cl.: A61C 1/08, A61C 3/00, A61C 1/10

(54) **DENTAL HANDPIECE**
DENTALHANDSTÜCK
PIECE A MAIN DENTAIRE

(30) Priority: 07.02.2005 SE 0500281; 07.02.2005 US 593695 P
(43) Date of publication of application: 24.10.2007
(73) Proprietor: Amdent AB, 149 25 Nynäshamn (SE)
(72) Inventor: ANDERSSON, Göran, S-149 41 Nynäshamn (SE)
(74) Representative: Herbjörnsen, Rut
(86) International application number: PCT/SE2006/050004
(87) International publication number: WO 2006/083228

(56) References cited:
- EP-A- 0 326 497
- US-A- 4 673 351
- US-A- 5 049 070
- US-A- 5 049 070
- US-A- 5 388 987
- US-A- 6 015 290
- US-A1- 2004 126 730

## Description

### TECHNICAL FIELD OF THE INVENTION

The present invention relates to a dental handpiece according to the preamble of Patent Claim 1.

### BACKGROUND TO THE INVENTION

Dental handpieces of the type in question can be used for removing plaque and tartar, or for grinding and polishing of tooth surfaces in oral procedures on a patient. For this purpose, a light source can be integrated in the handpiece in order to improve the illumination of the patient's oral cavity as a complement to the general -lighting that normally exists in a dentist's surgery, for example. The handpiece is also equipped with a lens arrangement that diffuses the light from the light source within the oral cavity, for example such that the beams of light are focused on the treatment site.

### PRIOR ART

Examples of this type of dental handpiece are to be found in SE 457 852 and US 6 015 290. However, these dental handpieces have a number of disadvantages.

In the event of the lens arrangement according to SE 457 852 being exposed to sudden jolts and its function deteriorating as a result of this, the whole dental handpiece has to be sent for repair so that the function of the lens arrangement can be restored. This means that alternative dental handpieces have to be available at the dentist's surgery to ensure that business can proceed as normal.

US 6 015 290 discusses which angle is desirable if the lens arrangement is to be able to carry the light beams from the lamp in such a way that they strike the treatment site. The angle also depends, however, on the length of the implement that is to be fitted in the dental handpiece for use at the treatment site. Nevertheless, this angle is chosen during assembly of the dental handpiece when the lens arrangement is fitted in the dental handpiece. Therefore, this dental handpiece will only be able to function with implements of a defined length, since otherwise the beams of light will have their focal point at sites other than the treatment site. However, if implements of different length have to be used in a treatment procedure, another dental handpiece with another angle of the lens arrangement has to be used to ensure that the focal point will exactly reach the treatment site. This means that a number of dental handpieces with a different angle setting of the lens arrangement have to be made available at the dental practice.

### OBJECT OF THE INVENTION

It is an object of the invention, therefore, to make available a dental handpiece with improved availability for use.

Another object of the invention is to make available a dental handpiece which can be easily adapted to implements of different length, while maintaining the same lighting properties.

### DISCLOSURE OF THE INVENTION

The object is achieved with the aid of a dental handpiece of the type defined in the introduction and having features according to the characterizing part of Patent Claim 1.

Since the lens arrangement is mounted in a detachable manner in the body downstream of the light source to permit exchange of lens arrangements, for example with different light diffusion properties, in the event of wear and tear, or for cleaning and sterilizing, etc., it is possible, if the lens arrangement suffers damage, to replace the lens arrangement with a new lens arrangement, without the entire dental handpiece having to be sent off to a workshop to restore the function of the lens arrangement. In addition, in the event of an implement with a different length having to be used, it becomes possible to replace the lens arrangement with a new lens arrangement having a different light diffusion property, without several dental handpieces having to be kept available at the dental practice.

The dental handpiece preferably comprises a detachable casing which encloses at least part of the body, the lens arrangement being fixed securely by the casing. In this way, the lens arrangement can be exchanged at the same time as the casing, for example for cleaning and sterilizing.

The casing is preferably made of a soft and flexible material, such as silicone. This makes securing the lens arrangement in the casing easier, while at the same time enhancing the comfort for the operator.

The casing preferably protrudes from the front part of the body, the lens arrangement being arranged in the protruding part of the casing. This means the lens arrangement stands free from the body, which makes fitting and dismantling of the lens arrangement easier.

The lens arrangement is preferably made of a material from one of the following material types: poly-N-methyl methacrylimide (PMMI), polycarbonate (PC), cyclic olefin copolymer (COC) or cyclic olefin polymer (COP). This results in a lens arrangement that withstands autoclaving, is resistant to alcohol, has good optical properties, is light in weight and inexpensive to manufacture.

A channel expediently runs through the lens arrangement in the longitudinal direction of the body, this channel being intended to accommodate the implement. In this way, the lens arrangement constitutes a part that is independent of the implement.

The lens arrangement is preferably formed as a truncated cone, the truncated cone narrowing in the direction towards the point of the implement. In this way, a large amount of light can be let into the wider part of the truncated cone, which permits use of a large light source. In addition, this design contributes to the lens arrangement being more easily secured by the casing.

The lens arrangement is expediently designed to divide the light from the light source into a focusing part for spot illumination of a defined site within the oral cavity, and into a diverging part for general illumination of the oral cavity. This permits simultaneous high-intensity spot illumination and low-intensity general illumination of the oral cavity, which contributes to improved viewing of the oral cavity during the oral procedure.

The focusing part preferably comprises a diffusion of the light at an angle α which lies within the range of 10-25°. This ensures good spot illumination of the treatment site in the oral cavity when using a wide variety of implements.

The diverging part expediently comprises a diffusion of the light at an angle β which lies within the range of 50-60°. This creates good general illumination of the oral cavity.

At least part of the lens arrangement is expediently made of a coloured material. In this way, the operator can use a colour resulting in a wavelength that gives the desired contrast and light image in the oral cavity depending on the type of oral procedure that is to be performed.

### BRIEF DESCRIPTION OF THE FIGURES

The invention will now be described with reference to the attached sheet of drawings, in which:
Fig. 1 shows a perspective view of a dental handpiece according to the invention,
Fig. 2 shows a cross-sectional view of the dental handpiece from Fig. 1,
Fig. 3 is a perspective view of the dental handpiece showing the inside of the dental handpiece,
Figures 4a - 4e show different views of a lens arrangement,
Figures 5a - 5c show three embodiments of a lens arrangement intended for a dental handpiece according to the invention,
Fig. 6 shows a perspective view of a dental handpiece according to an alternative embodiment of the invention.

### DETAILED DESCRIPTION OF PREFERRED EMBODIMENTS

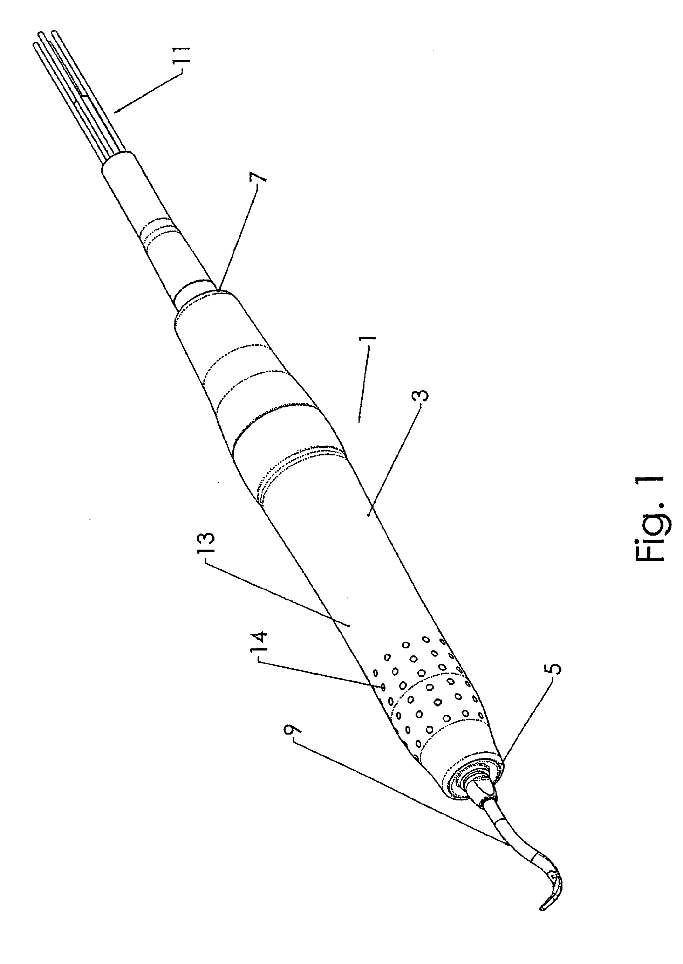

Fig. 1 shows a dental handpiece 1 intended to be manoeuvred by an operator, such as a dentist or dental hygienist, when performing oral procedures in a patient's oral cavity, for example for removing tartar or plaque. The handpiece 1 according to the invention is what is called a scaler, with a piezoelectric mechanism for creating a vibrating action, although the handpiece 1 could also be driven according to magnetostrictive principles. The handpiece 1 according to Fig. 1 comprises an elongate body 3 with a first end 5 and a second end 7. Arranged detachably at the first end 5 of the elongate body, there is an implement 9 in the form of a tip 9 for removing plaque and/or tartar. From the other end 7 of the elongate body 3, lines 11 intended for supplying power to the handpiece 1 and controlling it extend to power supply and control members (not shown), and also channels for supply of cooling and cleaning liquid. Arranged around the elongate body 3 there is a casing 13, preferably made of a soft, flexible material. This casing 13 is the part of the dental handpiece 1 that the operator holds when manoeuvring the handpiece, and it is intended to afford an ergonomic grip for the operator, contribute to increased tactility, absorb any vibrations that may arise during use of the handpiece, and prevent stress damage during use. The casing 13 is also provided with knurls 14 in order to improve these properties. The casing 13 is detachable in order that it can be exchanged for a casing with another ergonomic grip, depending on the operator's individual preferences, and in order to permit cleaning and/or sterilizing after it has been used.

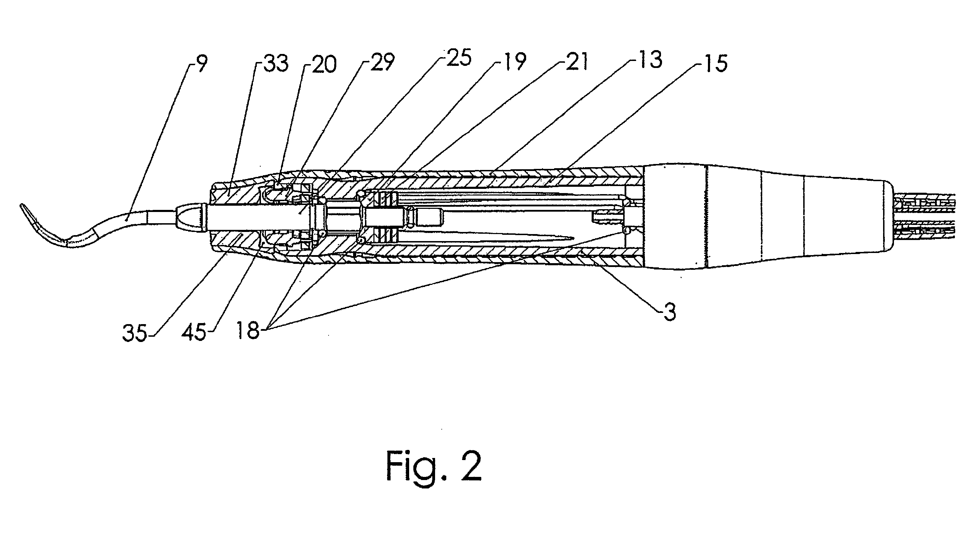

Fig. 2 shows a cross-sectional view of the dental handpiece from Fig. 1. The elongate body 3 comprises a stiff core 15 made of a polymer material, in which a piezo-driven ultrasonic resonator 19 is arranged. The latter is as usual composed of ceramic plates 21 intended to be fed with high-frequency current to create vibrations, usually in the frequency range of > 20 kHz. The resonator 19 is clamped securely inside the polymer core 15 with the aid of three O-rings 18 whose purpose is to form a resilient bearing for -the resonator 19 in the stiff core 15 and also to ensure that moisture and water do not get into the internal parts of the handpiece 1. A sealing element 20 is also arranged in the front part 5 of the elongate body 3 for the same reasons.

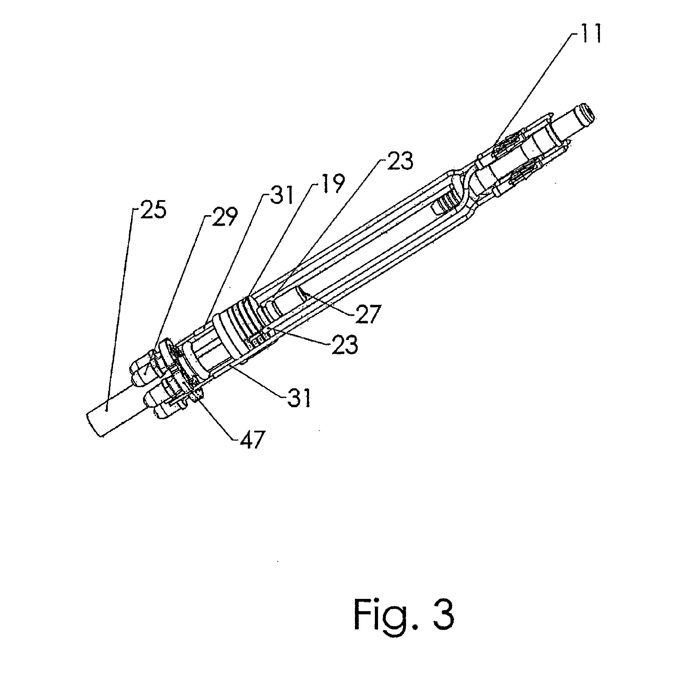

From Fig. 3, together with Fig. 2, it will also be seen that the current supply to the resonator 19 takes place via lines 23 connected to a current source (not shown). A metal shaft 25 is in threaded engagement with the resonator 19 and extends, concentrically in relation to the elongate body 3, to the front end 5 of the latter, where different implements 9 can be attached to the shaft 25 depending on the type of dental procedure that is to be performed. A channel 27 intended for cleaning/cooling liquid also extends through the resonator 19 and the metal shaft 25 from liquid sources (not shown). The polymer core 15 is covered by the soft and flexible casing 13, which is preferably made of a silicone material. This casing 13 preferably provides a grip with high friction and additionally has an ergonomically pleasing form which, for a dentist/dental hygienist, ensures a high level of tactility and operating comfort. The casing 13 is also detachable in order to permit cleaning/sterilizing between different patients, and the shape of the casing 13 can also be varied, or adapted to the shape of the core 15, for the purpose of offering different grips according to the type of procedure that is to be performed, and in order to satisfy the individual preferences of the dentist/dental hygienist.

A light source 29 in the form of six light-emitting diodes 29 is arranged in the front part 5 of the handpiece 1. These are placed in a common plane, in the circumferential direction of the metal shaft. The light-emitting diodes are fed with current from two separate lines 31, which in turn are connected to a current source (not shown). To improve the illumination of the oral cavity, a lens arrangement 33 (see Fig. 2) is arranged downstream of the light source 29 so as to permit a diffusion of the light within the oral cavity in accordance with the operator's requirements.

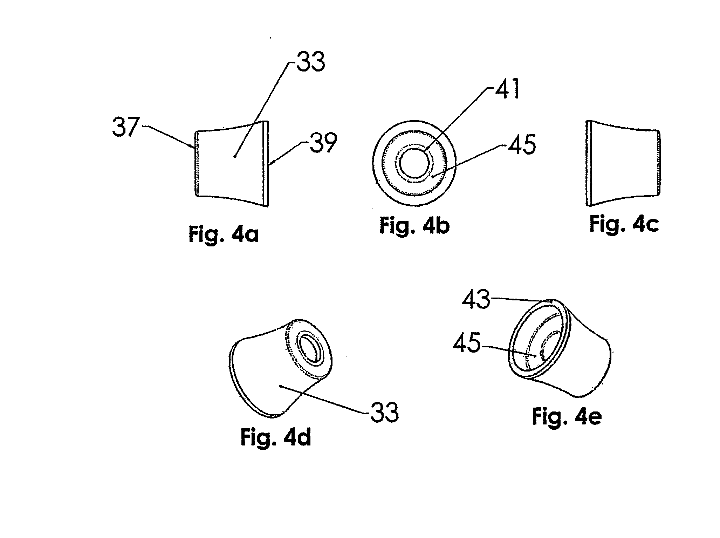

Figures 4a - 4e show different views of the lens arrangement 33. The lens arrangement 33 has a substantially circular cross section with a front end 37 and a rear end 39, the rear end 39 narrowing towards the front end 37 such that the lens arrangement forms a substantially truncated cone. A channel 41 extends through the lens arrangement with its centre axis coinciding with the longitudinal axis of the lens arrangement. This channel 41 is intended to accommodate the implement 9 after it has been attached to the shaft 25. At the rear end 39 of the lens arrangement 33, a collar 43 forms a circular recess 45 intended to partially accommodate the light-emitting diodes 29.

It will also be seen from Figures 2 and 3 that the diodes are intended to be mounted in the circumferential direction of the recess 45 each in a respective diode holder 47. The soft, flexible casing 13 protrudes a short distance from the front end of the elongate body 3 and forms a space 35 which is defined by the inner circumference of the casing 13 and the outer circumference of the metal shaft 25. The lens arrangement 33 can be arranged in this space and held in position between the casing 13 and the metal shaft 25. When fitted in the handpiece, the lens arrangement 33 will be supported by the diodes 47 such that its position in the longitudinal direction is correct with respect to the diodes 29 and such that it is securely clamped by the soft, flexible casing 13.

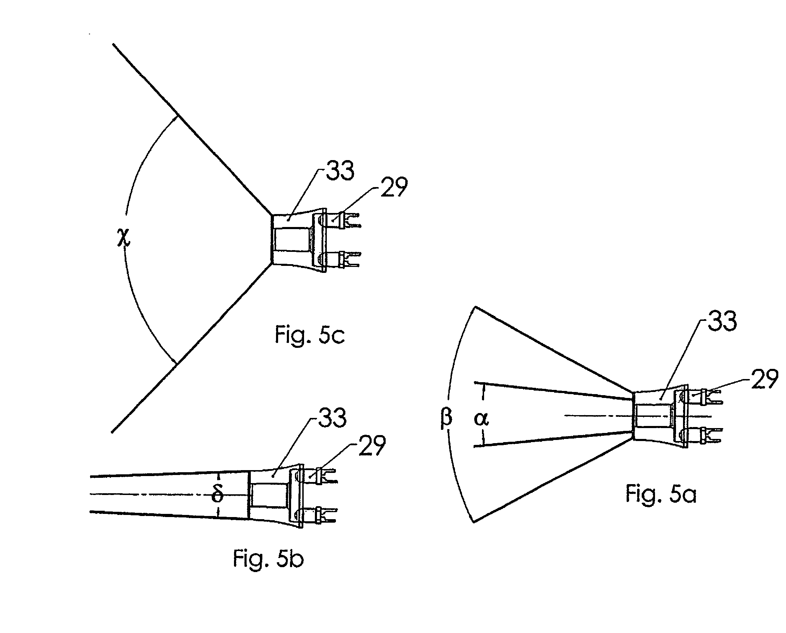

Fig. 5a shows a first variant of a lens arrangement 33 which is designed with a grinding so that the diode light introduced into the lens arrangement is separated and conveyed out from the lens arrangement in different ways. The light leaving the lens arrangement is divided up into a first, focusing part α and a second, diverging part β. The focusing part has a high intensity and forms a spot illumination around the tip of the implement 9 and thus illuminates the specific treatment site in the oral cavity. Because of its scatter, the diverging part has a lower intensity, but for this reason it provides a general illumination of the oral cavity that counteracts the formation of shadows, which could otherwise impair the view in the oral cavity.

The diffusion of the spot illumination is defined by an angle α which preferably lies within the range of 10-25° in order to ensure that the focusing spot reaches the tip of the implement. The diffusion of the general illumination is defined by an angle β which preferably lies in the range of 50-60°. This embodiment of the lens arrangement is suitable for most applications where spot illumination and general illumination of the oral cavity are both wanted at the same time.

Fig. 5b shows a second embodiment of a lens arrangement 33 which is designed with a grinding so that the diode light introduced into the lens arrangement is conveyed out of the lens arrangement in an essentially focusing manner. The diffusion of the light is defined by an angle δ which preferably lies in the range of 0-5°, i.e. light beams that are either parallel to the centre line of the lens arrangement or converge in towards the latter. This embodiment of the lens arrangement is suitable for direct point treatment in the oral cavity, for example when a dentist is carrying out treatment of a tooth root and therefore wishes a very high intensity of the spot illumination.

Fig. 5c shows a third embodiment of a lens arrangement 33 which is designed with a grinding so that the diode light introduced into the lens arrangement is conveyed out of the lens arrangement in an essentially diverging manner. The diffusion of the light is defined by an angle χ which preferably lies in the range of 60-90°. This embodiment of the lens arrangement is suitable, for example, for diagnostic purposes when a dental hygienist is carrying out a general examination of the state of the mouth without the need for any direct spot illumination.

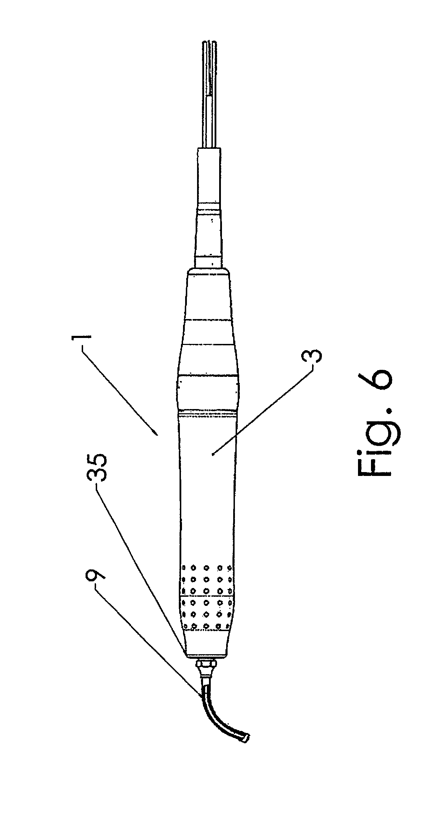

Although the above embodiments exclusively deal with a dental handpiece intended for removing plaque and/or tartar, the invention is not limited to this type of handpiece alone. The lens arrangement can be used together with alternative dental handpieces intended for various types of oral procedures where the view afforded to the dentist or dental hygienist plays an important role. For example, a dental handpiece 1' in the form of a polishing tool with a blasting action is conceivable, such as is shown in Fig. 6. Instead of an implement with a vibrating action, the implement constitutes a nozzle 9 arranged at the front part of the body 3 of the handpiece. By way of channels and mixer elements (not shown) arranged in the body 3, the nozzle 9 is connected to a source (not shown) of compressed air and powder. During use of the handpiece, the operator, i.e. the dentist or dental hygienist, can polish and/or clean the tooth surfaces of a patient using a powder and air mixture suitable for the purpose. The lens arrangement 35 is arranged in the body 3 in the same way as in the description of the previously described embodiment, and reference is therefore made to the relevant parts of these sections.

## Claims

1. A dental handpiece (1; 1') intended to be held by an operator, such as a dentist or dental hygienist, said dental handpiece comprises:
- a body (3),
- an implement (9) being able to be fitted in a front part (5) of the body (3) so that the operator is able to carry out an oral procedure on a patient with the aid of the implement (9) when holding the handpiece,
- a light source (29) arranged in the front part of the handpiece and intended to emit light for illuminating the patient's oral cavity during the oral procedure,
- a lens arrangement (33) designed to diffuse the light from the light source (29) within the patient's oral cavity,
**characterized in that** the lens arrangement (33) is arranged in a detachable manner downstream of the light source (29) in order to permit exchange of lens arrangements, for example with different light diffusion properties, in the event of wear and tear, or for cleaning and sterilizing, etc.

2. Dental handpiece according to Claim 1, additionally comprising a detachable casing (13) which encloses at least part of the body (3), the lens arrangement (33) being held securely by the casing (13).

3. Dental handpiece according to Claim 2, in which the casing (13) is made of a soft and flexible material, such as silicone.

4. Dental handpiece according to Claim 3, in which the casing (13) protrudes from the front part (5) of the body (3), the lens arrangement (33) being mounted in a protruding part (35) of the casing (13).

5. Dental handpiece according to any of the preceding claims, in which the lens arrangement (33) is made of one of the following types of materials: PMMI, PC, COC or COP.

6. Dental handpiece according to any of the preceding claims, in which a channel (41) extends through the lens arrangement (33) in the longitudinal direction of the body, in which channel (41) the implement (9) is intended to be fitted.

7. Dental handpiece according to any of the preceding claims, in which the lens arrangement (33) is designed as a truncated cone, the truncated cone narrowing in the direction of the tip of the implement (9).

8. Dental handpiece according to any of the preceding claims, in which the lens arrangement (33) is designed to divide the light from the light source (29) into a focusing part for spot illumination of a defined site within the oral cavity and into a diverging part for general illumination of the oral cavity.

9. Dental handpiece according to Claim 8, in which the focusing part comprises a diffusion of the light at an angle (α) lying in the range of 10-25°.

10. Dental handpiece according to either of Claims 8 and 9, in which the diverging part comprises a diffusion of the light at an angle (β) lying in the range of 50-60°.

11. Dental handpiece according to any of the preceding claims, in which at least part of the lens arrangement (33) is made of a colored material.

## Patentansprüche

1. Dentalhandstück(1; 1') vorgesehen, um von einem Bediener, wie einem Zahnarzt oder einem Zahnhygieniker, gehalten zu werden, wobei das Handstück umfasst:
einen Körper (3),
ein Werkzeug (9), das in einem vorderen Teil (5) des Körpers (3) so eingesetzt werden kann, dass der Bediener, wenn er das Handstück hält, in der Lage ist eine orale Behandlung an einem Patienten mit Hilfe des Werkzeuges (9) durchzuführen,
eine Lichtquelle (29), die in dem vorderen Teil des Handstücks angeordnet ist und die dazu gedacht ist Licht zum Erleuchten der Mundhöhle des Patienten während der oralen Behandlung auszusenden,
eine Linsenanordnung (33), die ausgebildet ist das Licht der Lichtquelle (29) innerhalb der Mundhöhle des Patienten zu streuen,
**dadurch gekennzeichnet, dass**
die Linsenanordnung (33) auf abnehmbare Weise der Lichtquelle (29) nachgelagert angeordnet ist, um den Austausch von Linsenanordnungen, zum Beispiel mit unterschiedlichen Lichtstreuungseigenschaften, im Fall von Abnutzung oder zum Reinigen und Sterilisieren, etc. zuzulassen.

2. Dentalhandstück nach Anspruch 1, zusätzlich umfassend ein abnehmbares Gehäuse (13), das zumindest einen Teil des Gehäuses (3) umschließt, wobei die Linsenanordnung (33) sicher von dem Gehäuse gehalten wird.

3. Dentalhandstück nach Anspruch 2, bei dem das Gehäuse (13) aus einem weichen und flexiblen Material, wie Silikon, hergestellt ist.

4. Dentalhandstück nach Anspruch 3, bei dem das Gehäuse (13) sich von dem vorderen Teil (5) des Körpers (3) erstreckt, wobei die Linsenanordnung (33) in einem hervorstehenden Teil (35) des Gehäuses (13) angeordnet ist.

5. Dentalhandstück nach einem der vorhergehenden Ansprüche, bei dem die Linsenanordnung (33) aus einem der folgenden Materialtypen hergestellt ist: PMMI, PC, COC oder COP.

6. Dentalhandstück nach einem der vorhergehenden Ansprüche, bei dem ein Kanal (41), in welchen das Werkzeug (9) vorgesehen ist eingesetzt zu werden, sich durch die Linsenanordnung (33) in der Längsrichtung des Körpers erstreckt.

7. Dentalhandstück nach einem der vorhergehenden Ansprüche, bei dem die Linsenanordnung (33) als Kegelstumpf ausgebildet ist, wobei der Kegelstumpf sich in Richtung der Spitze des Werkzeuges (9) verjüngt.

8. Dentalhandstück nach einem der vorhergehenden Ansprüche, bei dem die Linsenanordnung (33) ausgebildet ist das Licht der Lichtquelle (29) in einen fokussierenden Teil zur Punktbeleuchtung einer festgelegten Stelle innerhalb der Mündhöhle und in einen streuenden Teil zur allgemeinen Beleuchtung der Mundhöhle zu teilen.

9. Dentalhandstück nach Anspruch 8, bei dem der fokussierende Teil eine Streuung des Lichts in einem Winkel (α) im Bereich von 10-25° umfasst.

10. Dentalhandstück nach Anspruch 8 oder 9, bei dem der streuende Teil eine Streuung des Lichts in einem Winkel (β) im Bereich von 50-60° umfasst.

11. Dentalhandstück nach einem der vorhergehenden Ansprüche, bei dem zumindest ein Teil der Linsenanordnung (33) aus einem bunten Material hergestellt ist.

## Revendications

1. Pièce à main dentaire (1 ; 1'), destinée à être tenue par un opérateur, tel un dentiste ou un hygiéniste dentaire comprenant :
- un corps (3), un outil (9) pouvant être monté dans une partie avant (5) du corps (3) de telle sorte que l'opérateur peut exécuter une procédure buccale sur un patient à l'aide de l'outil (9) en tenant la pièce à main,
- une source de lumière (29) agencée dans la partie avant de la pièce main et destinée à émettre de la lumière afin d'illuminer la cavité buccale du patient durant la procédure buccale,
- une monture de lentille (33) conçue pour diffuser la lumière depuis la source de lumière (29) dans la cavité buccale du patient,
**caractérisée en ce que** la monture de lentille (33) est agencée de manière détachable en aval de la source de lumière (29) pour permettre l'échange de montures de lentilles, par exemple présentant différentes propriétés de diffusion de la lumière, en cas d'usure normale, ou à des fins de nettoyage et de stérilisation, etc.

2. Pièce à main dentaire selon la revendication 1, comprenant en outre un boîtier détachable (13) qui renferme au moins une partie du corps (3), la monture de lentille (33) étant fixée solidement par le boîtier (13).

3. Pièce à main dentaire selon la revendication 2, dans laquelle le boîtier (13) est fait d'un matériau souple et flexible, tel du silicone.

4. Pièce à main dentaire selon la revendication 3, dans laquelle le boîtier (13) fait saillie depuis la partie avant (5) du corps (3), la monture de lentille (33) étant montée dans une partie saillante (35) du boîtier (13).

5. Pièce à main dentaire selon l'une quelconque des revendications précédentes, dans laquelle la monture de lentille (33) est faite des types suivants de matériaux : PMMI (poly-N-méthyl méthacoylamide), PC (polycarbonate), COC (copolymère oléfine cyclique) ou COP (polymère oléfine cyclique).

6. Pièce à main dentaire selon l'une quelconque des revendications précédentes, dans laquelle un canal (41) s'étend à travers la monture de lentille (33) dans la direction longitudinale du corps, canal (41) dans lequel l'outil (9) est destiné à être monté.

7. Pièce à main dentaire selon l'une quelconque des revendications précédentes, dans laquelle la monture de lentille (33) est conçue comme un cône tronqué, ce cône tronqué se rétrécissant en direction de la pointe de l'outil (9).

8. Pièce à main dentaire selon l'une quelconque des revendications précédentes, dans laquelle la monture de lentille (33) est conçue pour diviser la lumière de la source de lumière (29) en une partie de focalisation pour illuminer un emplacement défini dans la cavité buccale, et en une partie divergente pour illuminer l'ensemble de la cavité buccale.

9. Pièce à main dentaire selon la revendication 8, dans laquelle la partie de focalisation comprend une diffusion de la lumière selon un angle (α) compris dans la plage de 10-25°.

10. Pièce à main dentaire selon l'une quelconque des revendications 8 et 9, dans laquelle la partie divergente comprend une diffusion de la lumière selon un angle (β) compris dans la plage de 50-60°.

11. Pièce à main dentaire selon l'une quelconque des revendications précédentes dans laquelle au moins une partie de la monture de lentille (33) est faite d'un matériau coloré.
